# EUROPEAN PATENT SPECIFICATION

(11) **EP 3 894 764 B1**
(45) Date of publication and mention of the grant of the patent: **21.02.2024**
(21) Application number: 19798258.0
(22) Date of filing: 04.11.2019
(51) Int. Cl.: F25D 17/04, A23L 3/3445, A23L 5/20, A23B 7/04, A23B 7/152, A23L 19/00

(54) **A COOLING APPLIANCE COMPRISING A CRISPER**
KÜHLGERÄT MIT EINEM GEMÜSEFACH
APPAREIL DE REFROIDISSEMENT COMPRENANT UN BAC À LÉGUMES

(30) Priority: 11.12.2018 TR 201819101
(43) Date of publication of application: 20.10.2021
(73) Proprietor: Arçelik Anonim Sirketi, 34445 Istanbul (TR)
(72) Inventor: AKINCI, Irem, 34950 ISTANBUL (TR); INAN, Mehmet, 34950 ISTANBUL (TR); KAYA, Metin, 34950 ISTANBUL (TR); DINCER, Cuneyt, 34950 ISTANBUL (TR); ERKAYMAZ, Taner, 34950 ISTANBUL (TR); CAM, Ihsan Burak, 34950 ISTANBUL (TR)
(86) International application number: PCT/EP2019/080021
(87) International publication number: WO 2020/120025

(56) References cited:
- EP-A1- 2 947 405
- CN-A- 107 897 639
- CN-U- 203 190 747
- CN-Y- 2 333 197
- US-A1- 2006 130 498
- US-A1- 2013 059 047
- US-A1- 2017 368 215
- US-A1- 2018 232 689

## Description

The present invention relates to a cooling device, in particular to a refrigerator, comprising a crisper which enables vegetables and fruits to be consumed in a hygienic and healthy manner.

Today, in agricultural activities various pesticides are used to protect the vegetables and fruits against pests such as insects, etc. which adversely affect the growth thereof. Pesticides are substances or mixtures of substances used to prevent, control, or reduce harmful organisms during agricultural practices. Said pesticides may be a chemical agent, a biological agent such as virus or bacteria, an antimicrobial or any disinfectant material. Said harmful organisms may be insects, plant pathogens, weeds, mollusks and/or microbes which may damage human food sources or spread diseases. Although the use of pesticides is beneficial for the production phase in agriculture, they may cause many health problems due to potential toxic effects for humans since they can remain on the plant after the completion of the growth of the plant as a residue. If vegetables and fruits are consumed with pesticide residues thereon after purchase, various risks to human health arise.

After being purchased by consumers, vegetables and fruits are stored in fresh food compartments in cooling devices such as refrigerators and washed before use. However, washing is often insufficient for removing pesticides. In this case, consumers use some conventional methods or consume vegetables and fruits with residues thereon. For example, vinegar, which is a natural product, is a supporting agent used in the washing process to remove residues on vegetables and fruits.

In addition to conventional methods, another known method is to apply ozone into the crispers containing fruits and vegetables by means of an ozone source and thus to allow the chemical disintegration of residues on the fruits and vegetables. However, since ozone above a certain value is also harmful to human health, such chemical disintegration causes another unhealthy condition for humans. Therefore, it is very important to clean the pesticide residues on the fruits and vegetables and to control the substance used in the cleaning process so as not to harm human health.

In the state of the art Chinese Utility Model Document No. CN204165319U, a compartment is disclosed, comprising an ozone and UV light source for removing the pesticides on fruits and vegetables.

In the state of the art Patent Document No. CN106052281, a refrigerator is disclosed, comprising an ozone source for removing the pesticides on fruits and vegetables. One such refrigerator is also disclosed in European Patent Application No. EP 2 947 405 A1.

The aim of the present invention is the realization of a cooling device comprising a crisper for removing pesticide residues on vegetables and fruits.

Another aim of the present invention is the realization of a cooling device comprising a fresh food compartment wherein a controlled pesticide removal process is carried out so as not to harm human health while destroying pesticide residues on vegetables and fruits.

The cooling device of the present invention comprises a crisper wherein fresh foods such as vegetables and fruits are stored, and an ozone generator which is disposed in said crisper and which is the source of ozone for the breakdown of pesticides on fresh foods.

By means of the cooling device of the present invention, the ozone generator is enabled to deliver ozone to the crisper at a rate suitable for the amount of fresh food in the crisper. The sensor unit in the cooling device detects the level and weight of fruit and vegetables in the crisper and informs the control unit about the amount of ozone required for the disintegration of the pesticide present in the crisper. The control unit enables the ozone generator to send ozone to the crisper according to the data received from the sensor unit.

The sensor unit comprises at least one camera and at least one weight sensor.

The camera captures the images of the crisper and transfers the same to the control unit. The weight sensor measures the weight of the vegetables and fruits in the crisper and transmits the fullness information of the crisper to the control unit. The control unit, which determines the fullness level in the crisper via the image and the weight, calculates the amount of ozone to be sent from the ozone generator to the crisper. Thus, excessive ozone is prevented from being delivered into the crisper for removing the pesticide on the foodstuffs.

The cooling device of the present invention further comprises at least one ozone sensor for controlling the amount of ozone delivered by the ozone generator. Thus, the amount of ozone in the crisper is controlled to remain within the range which does not harm human health.

By means of the present invention, a cooling device is realized, comprising a fresh food compartment wherein the pesticides on the vegetables and fruits are destroyed by ozone release which helps to remove the pesticide on the fruits and vegetables in a controlled manner.

In an embodiment of the present invention, the ozone generator also produces negative and/or positive ions, thus helping to disintegrate pesticides with an additional cleaning agent as well as ozone, and to remove any odors formed in the crisper.

Embodiments relating to the cooling device realized in order to attain the aim of the present invention are illustrated in the attached figures, where:

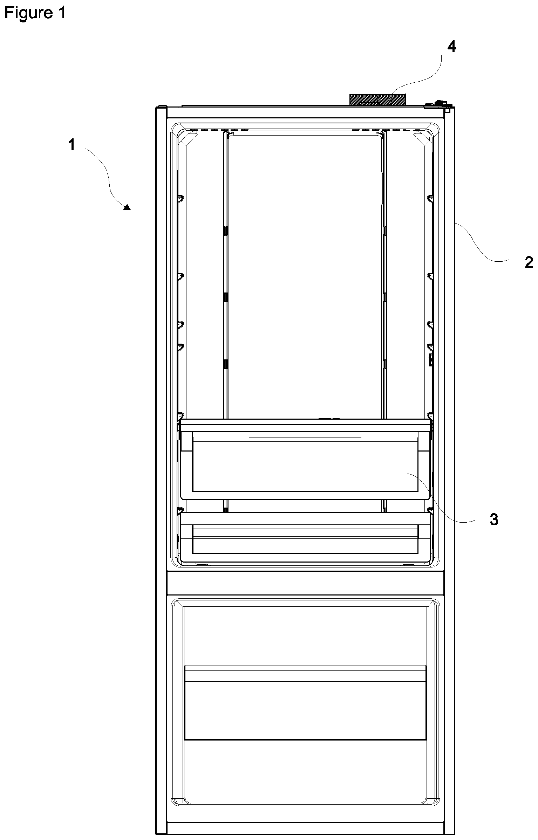

Figure 1- is the front view of the cooling device comprising the fresh food compartment of the present invention.

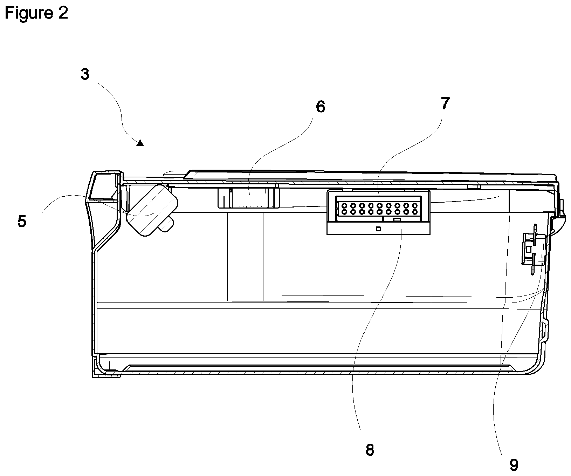

Figure 2- is the cross-sectional side detailed view of the crisper wherein the fresh food is stored in the cooling device of the present invention in an embodiment of the present invention.

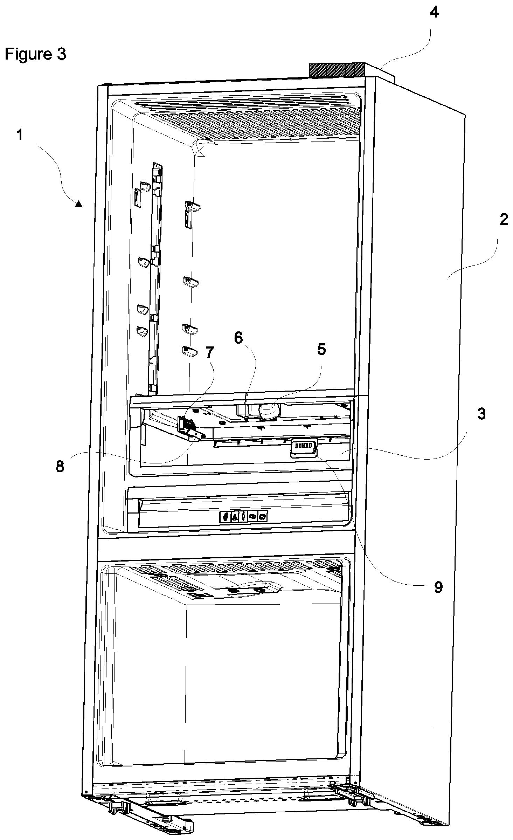

Figure 3- is the detailed view of the crisper of the cooling device of the present invention in an embodiment of the present invention.

The elements illustrated in the figures are numbered as follows:
1. Cooling device
2. Body
3. Crisper
4. Control unit
5. Sensor unit
6. Ozone generator
7. Filter
8. UV light source
9. Sensor

The cooling device of the present invention is disclosed in independent claim 1.

In the cooling device (1) of the present invention, fresh foodstuffs such as fruits and vegetables, are stored in the crisper (3) wherein suitable conditions of light, moisture, etc. for preserving the freshness thereof are provided. It is very important for human health that the pesticides remaining on said fresh foodstuffs after the agricultural production stage are chemically disintegrated in the crisper (3) before the user washes the same. The cooling device (1) of the present invention comprises the ozone generator (6) which can disintegrate the pesticide residues on the foodstuffs in the crisper (3). Ozone, which is a substance which can chemically disintegrate pesticides and which is delivered by the ozone generator (6) into the crisper (3), is also a chemical substance which poses a threat to human health over a certain amount. Therefore, in the cooling device (1) of the present invention, the ozone generator (6) delivers the ozone to the chamber (3) in an amount sufficient to disintegrate the pesticides on the vegetables and fruits in the crisper (3) and in a ratio which is not harmful to human health. The cooling device (1) comprises the sensor unit (5) for detecting the amount of vegetables and fruits in the crisper (3). The sensor unit (5) determines the fullness of the crisper (3) using parameters such as the fullness of the crisper (3) with vegetables and fruits, in other words the level and weight of the vegetables and fruits in the crisper (3). The cooling device (1) of the present invention comprises the control unit (4) which enables the ozone generator (6) to deliver ozone according to said fullness rate determined by the sensor unit (5). Thus, according to the fullness information of the crisper (3) received from the sensor unit (5), the control unit (4) provides that the required amount of ozone is delivered from the ozone generator (6) to the crisper (3).

The sensor unit (5) comprises at least one camera and a weight sensor. The camera records the images in the crisper (3), and the weight sensor measures the weight, of the vegetables and fruits in the crisper (3) and transmits the same to the control unit (4), and the control unit (4) ensures that the amount of ozone required to disintegrate the pesticide in accordance with said fullness rate is delivered to the crisper (3).

The camera is positioned at the upper region of the crisper (3) at an angle which is suitable for capturing images of the entire crisper (3).

In an embodiment of the present invention, the ozone generator (6) can be a ionizer or plasma generator. The amount of ozone to be delivered from the ozone generator (6) to the crisper (3) is at most 0.05 ppm, which is in accordance with international health data. In this way, ozone is prevented from forming an unhealthy residue while pesticides are chemically disintegrated.

In case the ionizer is used as the ozone generator (6), negative ions (O⁻and OH⁻) are generated in addition to the ozone which disintegrates the pesticide, and said negative ions neutralize positively charged unwanted particles (positively charged odor components) or microorganisms suspended in the air. Thus, in addition to the disintegration of the pesticides by ozone, the air in the crisper (3) is also cleaned and the odor is removed.

In an embodiment of the present invention, the ozone generator (6), which is an ionizer, is capable of generating at least 3 million O⁻ and OH⁻ ions per hour.

In another embodiment of the present invention, the ozone generator (6), which is a plasma generator, generates positive ions such as H⁺ in addition to ozone and negative ions, thus removing the pesticides on the foodstuffs and eliminating both positively and negatively charged unwanted particles in the environment such that the ambient air is cleansed of all the unwanted organisms and particles.

In an embodiment of the present invention, the ozone generator (6), which is a plasma generator, is capable of generating at least 1.5 million O⁻ and OH⁻ and at least 2.5 million H⁺ per hour.

In another embodiment of the present invention, the ozone generation capacity for the ozone generator (6) is in the range of 0.4-0.5 mg/s. Thus, ozone is generated at the amount necessary for optimum pesticide removal in the crisper (3).

In an embodiment of the present invention, in the crisper (3) a filter (7) is provided so as to filter the ozone and by-products remaining in the crisper (3) after the pesticide on the vegetables and fruits is disintegrated. Said filter (7) ensures that the disintegration products (by-products or metabolites) which may occur as a result of the reaction between ozone and pesticides during pesticide disintegration are destroyed in the crisper (3).

In an embodiment of the present invention, the cooling device (1) comprises at least one ultraviolet (UV) light source (8) which is disposed on the filter (7) and which enables the filter (7) to be cleaned and regenerated so as to continue operating effectively. Thus, by-products accumulating on the filter (7) are also disintegrated and cleaned by the UV light source (8).

In an embodiment of the present invention, a light source with a wavelength of 315-410 nm is used as the UV light source (8) to clean the filter (7). This wavelength range is the most efficient wavelength required for the regeneration of the filter (7).

In an embodiment of the present invention, the cooling device (1) comprises a sensor (9) which is provided located in the crisper (3) for checking that the ozone delivered from the ozone generator (6) to the crisper (3) is delivered to the crisper (3) so as to remain at the level of 0.05 ppm, which is the maximum ozone limit set for human health in international standards. Thus, the amount of ozone delivered from the ozone generator (6) into the crisper (3) is continuously measured and prevented from being released into the crisper (3) at harmful limits for human health.

By means of the present invention, a cooling device (1) is realized, wherein the pesticides on the foodstuffs in the crisper (3) wherein fresh foodstuffs are stored and wherein the ozone delivered to the crisper (3) so as to remove pesticides is controlled so as to be prevented from harming human health.

## Claims

1. A cooling device (1) **comprising** a body (2); at least one crisper (3) which is disposed in the body (2) and wherein the foodstuffs desired to be kept fresh, such as vegetables and fruits, are stored; an ozone generator (6) which is disposed in the crisper (3), which sprays ozone onto the vegetables and fruits in the crisper (3) which is a substance providing for the chemical disintegration of pesticides, which thus enables the pesticides on the vegetables and fruits stored in the crisper (3) to be chemically disintegrated so as to prevent the same from harming human health; an ozone sensor (9) disposed in the crisper (3); and a control unit (4) arranged to adjust the amount of ozone delivered to the crisper (3) from the ozone generator (6), an amount sufficient to disintegrate the pesticides on the vegetables and fruits in the crisper (3) and in a ratio which is not harmful to human health; a sensor unit (5) which is disposed in the crisper (3) and which is arranged to determine the fullness rate of the crisper (3) according to level and weight of the vegetables and fruits stored in the crisper (3), wherein the sensor unit (5) comprises:
at least one camera positioned at an upper region of the crisper (3) at an angle suitable for capturing images of the entire crisper (3), for recording images of vegetables and fruits in the crisper (3); and a weight sensor for measuring weight of the vegetables and fruits in the crisper (3); and
wherein the control unit (4) is arranged to adjust the amount of ozone delivered to the crisper (3) from the ozone generator (6) according to the fullness rate information received from the sensor unit (5).

2. A cooling device (1) as in Claim 1, wherein a filter (7) is provided in the crisper (3) which filters the ozone and by-products remaining ir the crisper (3) after the pesticide on the vegetables and fruits is disintegrated.

3. A cooling device (1) as in Claim 2, wherein at least one ultraviolet (UV) light source (8) is disposed on the filter (7) which enables the filter (7) to be cleaned and regenerated so as to continue operating effectively.

4. A cooling device (1) as in Claim 3, wherein at least one UV light source (8)produces UV light with a wavelength of 315-410 nm.

5. A cooling device (1) as in any one of the above claims, wherein the ozone generator (6) is an ionizer and/or plasma generator to disintegrate the pesticides on the vegetables and fruits.

6. A cooling device (1) as in Claim 5, wherein the ozone generator (6) is an ionizer capable of generating at least 3 million O⁻ and OH⁻ ions per hour.

7. A cooling device (1) as in any one of the Claims 1 to 5, wherein the ozone generator (6) is a plasma generator capable of generating at least 1.5 million O⁻ and OH⁻ and at least 2.5 million H⁺ per hour.

8. A cooling device (1) as in any one of the above claims, wherein the ozone generator (6) generates 0.05 ppm ozone at most to be delivered to the crisper (3).

9. A cooling device (1) as in any one of the above claims, wherein the ozone sensor (9) which is disposed in the crisper (3) checks whether the ozone generator (6) delivers 0.05 ppm ozone at most to the crisper (3).

## Patentansprüche

1. Ein Kühlgerät (1) **umfasst** einen Körper (2); mindestens einen Gemüsefach (3), der im Körper (2) angeordnet ist und in dem die Lebensmittel, die frisch gehalten werden sollen, wie Gemüse und Obst, aufbewahrt werden; einen Ozongenerator (6), der im Gemüsefach (3) angeordnet ist und Ozon auf das Gemüse und die Früchte im Gemüsefach (3) sprüht, wobei es sich um eine Substanz handelt, die für die chemische Zersetzung von Pestiziden sorgt, so dass die Pestizide auf dem im Gemüsefach (3) gelagerten Gemüse und den Früchten chemisch zersetzt werden können, um zu verhindern, dass sie die menschliche Gesundheit schädigen; einen Ozonsensor (9), der im Gemüsefach (3) angeordnet ist; und eine Steuereinheit (4), die so angeordnet ist, dass sie die Menge an Ozon regelt, die vom Ozongenerator (6) an das Gemüsefach (3) geliefert wird, eine Menge, die ausreicht, um die Pestizide auf dem Gemüse und Obst im Gemüsefach (3) zu zersetzen, und in einem Verhältnis, das für die menschliche Gesundheit nicht schädlich ist; eine Sensoreinheit (5), die im Gemüsefach (3) angeordnet ist und dazu dient, den Füllgrad des Gemüsefach (3) entsprechend Füllstand und Gewicht des im Gemüsefach (3) gelagerten Gemüses und Obsts zu bestimmen, wobei die Sensoreinheit (5) folgendes umfasst: mindestens eine Kamera, die in einem oberen Bereich des Gemüsefachs (3) in einem Winkel positioniert ist, der geeignet ist, Bilder des gesamten Gemüsefachs (3) aufzunehmen, um Bilder von Gemüse und Früchten in dem Gemüsefach (3) aufzuzeichnen; und einen Gewichtssensor zum Messen des Gewichts des Gemüses und der Früchte in dem Gemüsefach (3); und wobei die Steuereinheit (4) so angeordnet ist, dass sie die Ozonmenge, die dem Gemüsefach (3) von dem Ozongenerator (6) zugeführt wird, entsprechend der von der Sensoreinheit (5) empfangenen Fülle-Information anpasst.

2. Ein Kühlgerät (1), wie in Anspruch 1 aufgeführt, wobei ein Filter (7) in dem Gemüsefach (3) vorgesehen ist, der das Ozon und die Nebenprodukte filtert, die in dem Gemüsefach (3) verbleiben, nachdem das Pestizid auf dem Gemüse und den Früchten abgebaut wurde.

3. Ein Kühlgerät (1), wie in Anspruch 2 aufgeführt, wobei mindestens eine Ultraviolett (UV)-Lichtquelle (8) auf dem Filter (7) angeordnet ist, die es ermöglicht, den Filter (7) zu reinigen und zu regenerieren, um weiterhin effektiv zu arbeiten.

4. Ein Kühlgerät (1), wie in Anspruch 3 aufgeführt, wobei mindestens eine UV-Lichtquelle (8) UV-Licht mit einer Wellenlänge von 315-410 nm erzeugt.

5. Ein Kühlgerät (1), wie in einem der vorherigen Ansprüchen aufgeführt, wobei der Ozongenerator (6) ein Ionisator und/oder Plasmagenerator ist, um die Pestizide auf dem Gemüse und den Früchten zu zersetzen.

6. Ein Kühlgerät (1), wie in Anspruch 5 aufgeführt, wobei der Ozongenerator (6) ein lonisator ist, der mindestens 3 Millionen O- und OH- Ionen pro Stunde erzeugen kann.

7. Ein Kühlgerät (1), wie in einem der Ansprüche 1 bis 5 aufgeführt, wobei der Ozongenerator (6) ein Plasmagenerator ist, der mindestens 1,5 Millionen O- und OH- und mindestens 2,5 Millionen H+ pro Stunde erzeugen kann.

8. Ein Kühlgerät (1), wie in einem der vorherigen Ansprüchen aufgeführt, wobei der Ozongenerator (6) höchstens 0,05 ppm Ozon erzeugt, das an das Gemüsefach (3) abgegeben wird.

9. Ein Kühlgerät (1), wie in einem der vorherigen Ansprüchen aufgeführt, wobei der im Gemüsefach (3) angeordnete Ozonsensor (9) prüft, ob der Ozongenerator (6) maximal 0,05 ppm Ozon in das Gemüsefach (3) abgibt.

## Revendications

1. Un dispositif de refroidissement (1) **comprenant** un corps (2) ; au moins un bac à légumes (3) disposé dans le corps (2) et dans lequel sont stockées les denrées alimentaires que l'on souhaite garder fraîches, telles que les légumes et les fruits ; un générateur d'ozone (6) disposé dans le bac à légumes (3), qui pulvérise de l'ozone sur les légumes et les fruits contenus dans le bac à légumes (3), qui est une substance permettant la désintégration chimique des pesticides, ce qui permet de désintégrer chimiquement les pesticides présents sur les légumes et les fruits stockés dans le bac à légumes (3), afin d'éviter qu'ils ne nuisent à la santé humaine ; un capteur d'ozone (9) placé dans le bac à légumes (3) ; et une unité de contrôle (4) conçue pour ajuster la quantité d'ozone fournie au bac à légumes (3) par le générateur d'ozone (6), une quantité suffisante pour désintégrer les pesticides sur les légumes et les fruits dans le bac à légumes (3) et dans un rapport qui n'est pas nuisible à la santé humaine ; une unité de détection (5) disposée dans le bac à légumes (3) et conçue pour déterminer le taux de remplissage du bac à légumes (3) en fonction du niveau et du poids des légumes et des fruits stockés dans le bac à légumes (3), dans laquelle l'unité de détection (5) comprend : au moins une caméra positionnée dans une zone supérieure du bac à légumes (3) à un angle approprié pour capturer des images de l'ensemble du bac à légumes (3), pour enregistrer des images des légumes et des fruits dans le bac à légumes (3) ; et un capteur de poids pour mesurer le poids des légumes et des fruits dans le bac à légumes (3) ; et dans lequel l'unité de commande (4) est conçue pour ajuster la quantité d'ozone délivrée au bac à légumes (3) par le générateur d'ozone (6) en fonction des informations sur le taux de remplissage reçues de l'unité de détection (5).

2. Un dispositif de refroidissement (1) selon la Déclaration 1, dans lequel un filtre (7) est prévu dans le bac à légumes (3) qui filtre l'ozone et les sous-produits restant dans le bac à légumes (3) après la désintégration du pesticide sur les légumes et les fruits.

3. Un dispositif de refroidissement (1) selon la Déclaration 2, dans lequel au moins une source de lumière ultraviolette (UV) (8) est disposée sur le filtre (7), ce qui permet au filtre (7) d'être nettoyé et régénéré afin de continuer à fonctionner efficacement.

4. Un dispositif de refroidissement (1) selon la Déclaration 3, dans lequel au moins une source de lumière UV (8) produit une lumière UV d'une longueur d'onde de 315-410 nm.

5. Un dispositif de refroidissement (1) tel que dans l'une quelconque des déclarations ci-dessus, dans lequel le générateur d'ozone (6) est un ioniseur et/ou un générateur de plasma pour désintégrer les pesticides sur les légumes et les fruits.

6. Un dispositif de refroidissement (1) selon la revendication 5, dans lequel le générateur d'ozone (6) est un ioniseur capable de générer au moins 3 millions d'ions O⁻ et OH⁻ par heure.

7. Un dispositif de refroidissement (1) selon l'une quelconque des déclarations 1 à 5, dans lequel le générateur d'ozone (6) est un générateur de plasma capable de générer au moins 1.5 million d'O⁻ et d'OH⁻ et au moins 2,5 millions d'H⁺ par heure.

8. Un dispositif de refroidissement (1) tel que dans l'une quelconque des déclarations ci-dessus, dans lequel le générateur d'ozone (6) génère 0,05 ppm d'ozone au maximum à délivrer au bac à légumes (3).

9. Un dispositif de refroidissement (1) tel que décrit dans l'une des déclarations ci-dessus, dans lequel le capteur d'ozone (9) placé dans le bac à légumes (3) vérifie si le générateur d'ozone (6) délivre au maximum 0,05 ppm d'ozone dans le bac à légumes (3).
